# EUROPEAN PATENT APPLICATION

(11) **EP 3 115 910 A1**
(43) Date of publication of application: **11.01.2017**
(21) Application number: 16172578.3
(22) Date of filing: 02.06.2016
(51) Int. Cl.: G06F 17/30

(54) **ELECTRONIC DEVICE AND METHOD FOR PROVIDING INFORMATION ASSOCIATED WITH NEWS CONTENT**

(30) Priority: 07.07.2015 KR 20150096783
(71) Applicant: Samsung Electronics Co., Ltd., Gyeonggi-do 16677 (KR)
(72) Inventor: CHOI, Dong-hyun, Gyeonggi-do (KR); SHIN, Yong-wook, Gyeonggi-do (KR); KIM, Kye-hyeon, Gyeonggi-do (KR); PARK, Kyung-su, Gyeonggi-do (KR); YOO, Ji-won, Gyeonggi-do (KR)
(74) Representative: Appleyard Lees IP LLP

(57) **Abstract**

An electronic device incudes: a tuner configured to receive news content; and a controller configured to extract text information from the news content, map the extracted text information onto pre-generated news clusters to select a news cluster corresponding to the text information, and provide a representative expression of the selected news cluster.

## Description

### CROSS-REFERENCE TO RELATED APPLICATION

This application claims priority from Korean Patent Application No. 10-2015-0096783, filed on July 7, 2015, in the Korean Intellectual Property Office, the disclosure of which is incorporated herein by reference in its entirety.

### BACKGROUND

### 1. Field

Apparatuses and methods consistent with exemplary embodiments relate to an electronic device and method for providing information associated with news content, and more particularly, to an electronic device and method for providing associated information by using text information indicating news content.

### 2. Description of the Related Art

A display apparatus is an apparatus that has a function of displaying an image that a user may view. The user may view a broadcast through the display apparatus. The display apparatus displays a broadcast that is selected by the user from a broadcast signal transmitted from a broadcasting station. There is a current global trend toward digital broadcasting from analog broadcasting.

Digital broadcasting refers to a broadcast transmitting a digital image and a voice signal. In comparison with analog broadcasting, the digital broadcast is robust with respect to external noise, thus reducing data loss, is appropriate for error correction, provides a high resolution, and provides a clear screen. The digital broadcast may also enable a bidirectional service unlike in the case of analog broadcasting.

Also, in addition to a digital broadcast function, a smart television (TV) has recently become commercially available, which provides various types of content. There is a need for research to provide a user with broadcast content and more varied viewing environments.

### SUMMARY

Provided are an electronic device and a method for providing information associated with news content.

Additional aspects will be set forth in part in the description which follows and, in part, will be apparent from the description, or may be learned by practice of exemplary embodiments.

According to an aspect of an exemplary embodiment, there is provided an electronic device including a tuner configured to receive news content; and a controller configured to extract text information from the news content, map the extracted text information onto pre-generated news clusters to select a news cluster corresponding to the text information, and provide a representative expression of the selected news cluster.

The controller may be further configured to extract the text information from at least one selected from among subtitles and a sound from the news content.

The device may further include a communicator, wherein the controller may be further configured to request news titles from an external server through the communicator, receive the news titles from the external server, and generate a news cluster into which the news titles are grouped according to topics.

The controller may be further configured to extract keywords from the news titles and group the news titles according to the topics by using the extracted keywords.

The controller may be further configured to generate a representative expression of one news cluster from keywords of news titles according to a preset algorithm.

The controller may be further configured to select a keyword having high weight information from keywords of the news titles and sequentially select keywords and arrange the selected keywords to generate a representative expression of the news cluster.

The controller may be further configured to map the extracted text information onto the news clusters to select a news cluster that is similar to the extracted text information by at least a preset threshold as a news cluster corresponding to the text information.

The device may further include a display, wherein the controller may be further configured to display a representative expression of the selected news cluster on the display.

The device may further include a communicator, wherein the controller may be further configured to transmit a representative expression of the selected news cluster to an external server through the communicator and receive result information, which may be searched for by using the representative expression as a search query language, from the external server.

The device may further include a display, wherein the controller may be further configured to display the received result information on the display.

The controller may be further configured to transmit the result information to a preset display apparatus through the communicator and control the preset display apparatus to display the result information on a display of the preset display apparatus.

The device may further include a display, in which the controller may be further configured to display news titles from the selected news cluster on the display.

According to an aspect of another exemplary embodiment, there is provided a method of providing information associated with news content, the method including: extracting text information from news content received through a tuner; selecting a news cluster corresponding to the extracted text information by mapping the extracted text information onto pre-generated news clusters; and providing a representative expression of the selected news cluster.

The text information may be extracted from at least one selected from among subtitles and a sound from the news content.

The selecting the news cluster may include: requesting news titles from an external server through a communicator, receiving the news titles from the external server, and generating a news cluster into which the news titles are grouped according to topics.

The generating the news cluster may include: extracting keywords from the news titles and grouping the news titles according to the topics by using the extracted keywords.

The providing the representative expression of the news cluster may include: generating a representative expression of one news cluster from keywords of news titles according to a preset algorithm.

The generating the representative expression may include: selecting a keyword having high weight information from keywords of the news titles and sequentially selecting keywords and arranging the selected keywords to generate the representative expression of the news cluster.

The selecting the news cluster may include: mapping the extracted text information onto the news clusters to select a news cluster that is similar to the text information by a preset threshold value or more as a news cluster corresponding to the text information.

The providing the representative expression of the news cluster may include: displaying the representative expression of the selected news cluster on a display.

The providing the representative expression of the news cluster may include: transmitting the representative expression of the selected news cluster to an external server through a communicator and receiving result information, which may be searched for by using the representative expression as a search query language, from the external server.

The providing of the representative expression of the news cluster may include: displaying the received result information on a display.

The providing the representative expression of the news cluster may include: transmitting the result information to a preset display apparatus through the communicator and controlling the preset display apparatus to display the result information on a display of the preset display apparatus.

The method may further include displaying news titles from the selected news cluster on a display.

According to an aspect of another exemplary embodiment, there is provided a system including: a first server configured to provide news titles; a second server configured to provide a search result by using a search query language; and an electronic device including: a communicator; a tuner configured to receive a news content; and a controller configured to extract text information indicating the news content, map the extracted text information onto news clusters received from the first server and grouped according to topics to select a news cluster, select a news cluster corresponding to the text information, generate a representative expression of the selected news cluster, transmit the generated representative expression to the second server through the communicator, and receive result information, which is searched for by using the representative expression as a search query language, from the second server.

### BRIEF DESCRIPTION OF THE DRAWINGS

These and/or other aspects will become apparent and more readily appreciated from the following description of the exemplary embodiments, taken in conjunction with the accompanying drawings, in which:
FIG. 1 illustrates a system for providing information associated with news content, according to an exemplary embodiment;
FIGS. 2 and 3 are block diagrams of an electronic device, according to an exemplary embodiment;
FIG. 4 is a flowchart of a method of providing information associated with news content through an electronic device, according to an exemplary embodiment;
FIG. 5 is a flowchart of a method of controlling an electronic device, a first server, and a second server, according to an exemplary embodiment;
FIG. 6 illustrates an analysis of news content according to an exemplary embodiment;
FIG. 7 illustrates a news cluster according to an exemplary embodiment;
FIG. 8 illustrates generation of a representative expression of a news cluster, according to an exemplary embodiment;
FIG. 9 illustrates mapping of text information onto news clusters, according to an exemplary embodiment;
FIGS. 10 and 11 illustrate provision of search result information associated with news content, according to an exemplary embodiment;
FIGS. 12 and 13 illustrate provision of pieces of other news associated with news content, according to an exemplary embodiment;
FIG. 14 is a flowchart of providing search result information associated with news content, according to another exemplary embodiment; and
FIG. 15 illustrates provision of search result information associated with news content, according to another exemplary embodiment.

### DETAILED DESCRIPTION

Reference will now be made in detail to exemplary embodiments, examples of which are illustrated in the accompanying drawings, wherein like reference numerals refer to like elements throughout. In this regard, the exemplary embodiments may have different forms and should not be construed as being limited to the descriptions set forth herein. The embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Various modifications may be made to exemplary embodiments Therefore, exemplary embodiments will be illustrated in the drawings and will be described in detail with reference to the drawings. Like reference numerals refer to like elements throughout. Also, if detailed descriptions of well-known functions or elements associated with exemplary embodiments would obscure the descriptions, they may be omitted. Also, numbers (e.g., a first, a second, etc.) used in a process of describing the exemplary embodiments are identification symbols for distinguishing one element from another element.

Hereinafter, an electronic device associated with an exemplary embodiment will be described in more detail with reference to the attached drawings.

Examples of an electronic device that will be described herein may include an analog TV, a digital TV, a 3-dimensional (3D) TV, a smart TV, a light emitting diode (LED) TV, an organic LED (OLED) TV, a plasma TV, a monitor, etc. Also, it will be easily understood by those of ordinary skill in the art that the electronic device may be a desktop computer, a portable phone, a smart phone, a tablet PC, a laptop computer, a digital broadcast terminal, a personal digital assistant (PDA), a portable multimedia player (PMP), a navigation system, or the like.

When an element is referred to as being "connected" to another element, it may be "directly connected" or "electrically connected" to another element, and intervening elements may be present. When a part "comprises" an element, this may mean that the part may not exclude and may further include other elements as long as there is no contrary description.

Hereinafter, exemplary embodiments will be described in detail with reference to the attached drawings.

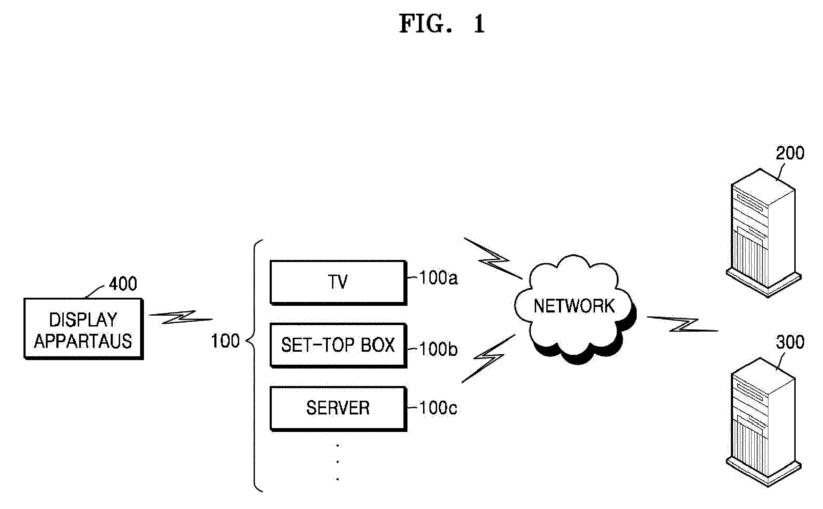

FIG. 1 illustrates a system for providing information associated with a news content, according to an exemplary embodiment.

Referring to FIG. 1, the system may include an electronic device 100, a first server 200, and a second server 300 that may communicate with one another through a network. According to an exemplary embodiment, the system may further include a display apparatus 400 that may be connected to the electronic device 100.

The network may be a telecommunications network. The telecommunications network may include at least one selected from a computer network, Internet, Internet of Things (IoT), and a telephone network.

In the system of FIG. 1, the electronic device 100 may be a TV 100a, a set-top box 100b, an Internet Protocol (IP) set-top box, or a server 100c but is not limited thereto. According to an exemplary embodiment, it will be easily understood by those of ordinary skill in the art that the electronic device 100 may be realized as an analog TV, a digital TV, a 3D TV, a smart TV, an LED TV, an OLED TV, a plasma TV, a monitor, or the like but is not limited thereto.

The set-top box 100b or the IP set-top box according to an exemplary embodiment is a terminal that includes a communicator and a processor and is connected to an external network to provide a multimedia communication service.

The electronic device 100 according to an exemplary embodiment may extract text information indicating a news content from the news content received through a tuner 135. The electronic device 100 may map the extracted text information on pre-generated news clusters to select a news cluster corresponding to the text information.

A news cluster may refer to a set into which pieces of news are grouped according to news titles of similar topics.

Also, the electronic device 100 according to an exemplary embodiment may generate a representative expression of a news cluster. The electronic device 100 according to an exemplary embodiment may display the representative expression of the news cluster or result information, which is searched through the second server 300 by using the representative expression as a search query language, on a display unit 115 of the electronic device 100.

According to an exemplary embodiment, when a user is viewing news, the user may be provided with a representative expression, such as a summary sentence of a news topic enabling the user to easily and quickly understand a news content, through the electronic device 100 or the display apparatus 400. Also, the user may be provided with search result information of an external search engine (e.g., an Internet portal site) including another news article, a moving image, a web document, etc., associated with the news content that is being broadcast, so as to increase understanding of the news.

According to another exemplary embodiment, the electronic device 100 may control to transmit result information, which is searched by using a representative expression of a news cluster or the representative expression searched by the second server 300 as a search query language, to the display apparatus 400 to display the result information on the display apparatus 400.

The first server 200 according to an exemplary embodiment may be a server that provides a news service.

The electronic device 100 according to an exemplary embodiment may collect news titles that are recently provided from the first server 200. For example, the electronic device 100 may receive news titles in a Really Simple Syndication (RSS) feed form and group pieces of news according to topics of the news titles to generate a news cluster.

Also, the system may further include a server, and the server may collect news titles to generate a news cluster. According to an exemplary embodiment, the electronic device 100 may request the news cluster from the server at preset time intervals, and the server may transmit a news cluster, which is generated based on recent news titles, to the electronic device 100.

The second server 300 according to an exemplary embodiment may receive a search request based on a search query language from the electronic device 100 and generate a search result by using the search query language. For example, the second server 300 is an Internet portal site, and may search for and provide a content such as a news article, a moving image, an image, an associated site, a web document, a blog, or the like associated with the search query language.

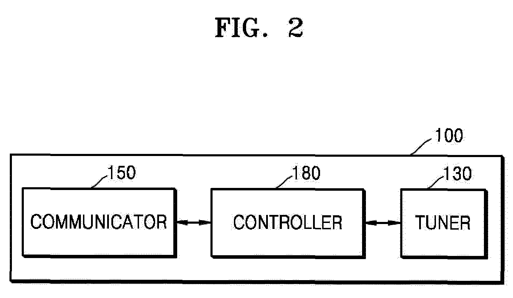

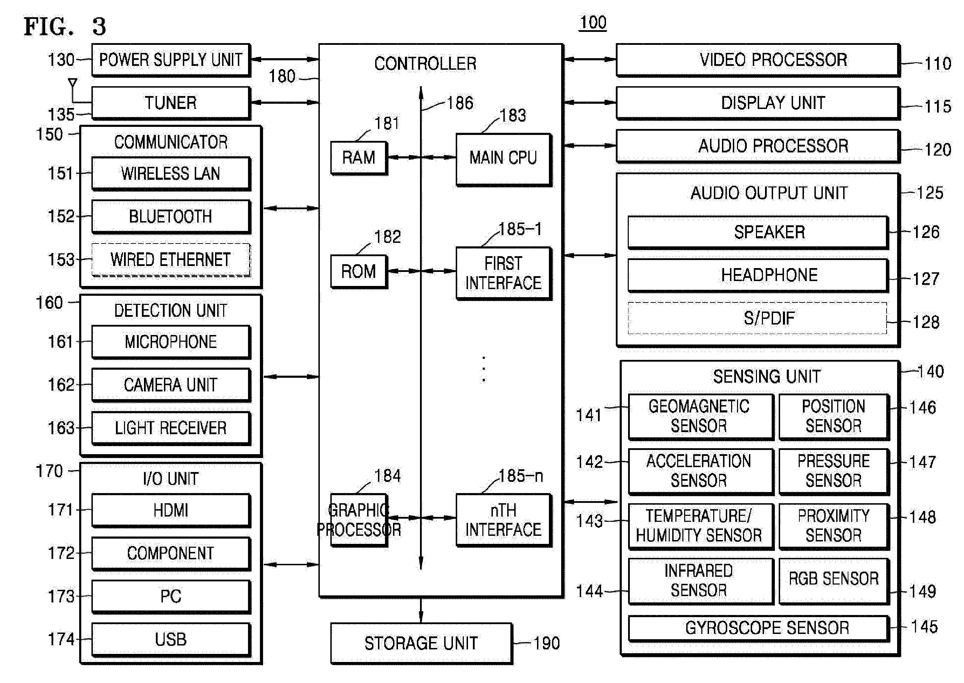

FIGS. 2 and 3 are block diagrams of the electronic device 100, according to an exemplary embodiment.

Referring to FIG. 2, the electronic device 100 may include a tuner 135, a communicator 150, and a controller 180. However, all of elements illustrated in FIG. 2 are not essential elements. The electronic device 100 may be realized by a larger number of elements than the elements illustrated in FIG. 2 or by a smaller number of elements than the elements illustrated in FIG. 2. Also, as described above with reference to FIG. 1, the electronic device 100 of FIG. 2 may be realized by the TV 100a, the set-top box 100b, or the server 100c.

For example, as shown in FIG. 3, the electronic device 100 according to an exemplary embodiment may further include a video processor 110, a display unit 115, an audio processor 120, an audio output unit 125, a power supply unit 130, a sensing unit 140, a detection unit 160, an input/output (I/O) unit 170, and a storage unit 190.

The elements mentioned above will now be sequentially described.

The video processor 110 performs processing with respect to video data received by the electronic device 100. The video processor 110 may perform various types of image processing, such as decoding, scaling, noise filtering, frame rate converting, resolution converting, etc., with respect to the video data.

The display unit 115 displays a video included in a broadcast signal received through the tuner 135 on a screen under control of the controller 180. The display unit 115 may also display a content (e.g., a moving image) input through the communicator 150 or the I/O unit 170. The display unit 115 may output an image stored in the storage unit 190 under control of the controller 180. Also, the display unit 115 may display a voice user interface (UI) (e.g., including a voice command guide) for performing a voice recognition task corresponding to a voice recognition or a motion UI (e.g., including a user motion guide for a motion recognition) for performing a motion recognition task corresponding to a motion recognition.

According to an exemplary embodiment, the display unit 115 may display a news content received through the tuner 135.

The display unit 115 may also display a representative expression of a news cluster corresponding to text information extracted from the news content.

Also, the display unit 115 may receive and display result information, which is searched by using the representative expression as a search query language, from an external server.

The display unit 115 may display news titles included in the news cluster.

The audio processor 120 performs processing with respect to audio data. The audio processor 120 may perform various types of processing, such as decoding, amplifying, noise filtering, etc., with respect to the audio data. The audio processor 120 may include a plurality of audio processing modules to process an audio corresponding to a plurality of contents.

The audio output unit 125 may output an audio included in a broadcast signal received through the tuner 135 under control of the controller 180. The audio output unit 125 may output an audio (e.g., a voice, a sound, or the like) input through the communicator 150 or the I/O unit 170. The audio output unit 125 may output an audio stored in the storage unit 190 under control of the controller 180. The audio output unit 125 may include at least one selected from a speaker 126, a headphone output port 127, and a Sony/Philips Digital Interface (S/PDIF) output port 128. The audio output unit 125 may include a combination of the speaker 126, the headphone output port 127, and the S/PDIF output port 128.

The power supply unit 130 supplies elements 110 through 190 of the electronic device 100 with power input from an external power source under control of the controller 180. The power supply unit 130 may supply the elements 110 through 190 with power output from one battery or two or more batteries located in the electronic device 100 under control of the controller 180.

The tuner 135 may amplify, mix, and resonate a broadcast signal received by wired or wireless to tune and select merely a frequency of a channel that the electronic device 100 is to receive from many radio frequency components. The broadcast signal includes an audio, a video, and additional information (e.g., an electronic program guide (EPG)).

The tuner 135 may receive a broadcast signal in a frequency band corresponding to a channel number (e.g., Cable TV No. 506) according to a user input (e.g., a control signal received from a control device, e.g., a channel number input, an up-down input of a channel, a channel input on an EPG screen, or the like).

The tuner 135 may receive a broadcast signal from various types of sources such as terrestrial broadcasting, cable broadcasting, satellite broadcasting, Internet broadcasting, etc. The tuner 135 may receive a broadcast signal from a source such as an analog broadcast, a digital broadcast, or the like. The broadcast signal received through the tuner 135 is decoded (e.g., audio-decoded, video-decoded, or additional information-decoded) to be divided into an audio, a video and/or additional information. The divided audio, video, and/or additional information may be stored in the storage unit 190 under control of the controller 180.

Also, the tuner 135 of the electronic device 100 may be one or plural. The tuner 135 may be realized as an all-in-one type with the electronic device 100, an additional device (e.g., a set-top box) having a tuner electrically connected to the electronic device 100, or a tuner connected to the I/O unit 170.

The tuner 135 according to an exemplary embodiment may receive a broadcast signal and output the broadcast signal to the display unit 115 under control of the controller 180.

The sensing unit 140 may sense a state of the electronic device 100 or a state around the electronic device 100 and transmit sensed information to the controller 180. The sensing unit 140 may include at least one selected from a magnetic sensor 141, an acceleration sensor 142, a temperature/humidity sensor 143, an infrared sensor 144, a gyroscope sensor 145, a position sensor (e.g., a global positioning system (GPS)) 146, a pressure sensor 147, a proximity sensor 148, and an RGB sensor (e.g., an illuminance sensor) 149 but is not limited thereto. Functions of sensors mentioned above may be intuitively inferred from their names by those of ordinary skill in the art, and their detailed descriptions are omitted.

Also, the sensing unit 140 may include a sensor for sensing a touch input performed through an input tool and a sensor for sensing a touch input performed by a user. In this case, the sensor for sensing the touch input performed by the user may be included in a touch screen or a touch pad. The sensor for sensing the touch input performed through the input tool may be located under a touch screen or a touch pad or in the touch screen or the touch pad.

The communicator 150 may connect the electronic device 100 to an external device (e.g., an audio device or the like) under control of the controller 180. The controller 180 may transmit and/or receive a content with an external device connected through the communicator 150 and download an application from the external device or browse a web for the application.

The communicator 150 may include at least one selected from a wireless Local Area Network (LAN) 151, Bluetooth 152, and wired Ethernet 153 in response to a performance and a structure of the electronic device 100. The communicator 150 may include a combination of the wireless LAN 151, the Bluetooth 152, and the wired Ethernet 153.

The communicator 150 may also include a Bluetooth Low Energy (BLE) communicator, a Near Field Communication (NFC) unit, a WLAN (Wi-Fi) communicator, a Zigbee communicator, an Infrared Data Association (IrDA) communicator, a Wi-Fi Direct (WFD) communicator, an ultra-wideband (UWB) communicator, an Ant+ communicator, or the like but is not limited thereto.

The communicator 150 may transmit and/or receive a wireless signal with at least one selected from a base station, an external terminal, and a server on a mobile communication network. Here, the wireless signal may include various types of data according to transmission and/or reception of a voice call signal, a video call signal, or letters and/or multimedia messages.

The communicator 150 may also include a broadcast receiver that receives a broadcast signal and/or broadcast-related information from an external source through a broadcast channel. The broadcast channel may include a satellite channel or a terrestrial channel.

Also, the communicator 150 may receive a control signal of an external control device under control of the controller 180. The control signal may be realized as a Bluetooth type, a radio frequency (RF) signal type, or a Wi-Fi type.

The detection unit 160 detects a voice, an image, or an interaction of the user.

A microphone 161 receives a voice uttered by the user. The microphone 161 may convert the received voice into an electrical signal and output the electrical signal to the controller 180. A user voice may include a voice corresponding to a menu or a function of the electronic device 100. A recognition range of the microphone 161 may be recommended within a range of 4 m from the microphone 161 to a location of the user and vary in response to a volume of the user voice and a surrounding environment (e.g., a speaker sound, surrounding noise, or the like).

The microphone 161 may be realized as an all-in-one type or a separate type with the electronic device 100. The separate type microphone 161 may be electrically connected to the electronic device 100 through the communicator 150 or the I/O unit 170.

It will be easily understood by those of ordinary skill in the art that the microphone 161 may be excluded according to a performance and a structure of the electronic device 100.

A camera unit 162 may include a lens and an image sensor. The camera unit 162 may support an optical zoom or a digital zoom by using a plurality of lenses and image processing. A recognition range of the camera unit 162 may be variously set according to an angle of a camera and a surround environment condition. If the camera unit 162 includes a plurality of cameras, the camera unit 162 may receive a 3D still image or a 3D motion by using the plurality of cameras.

The camera unit 162 may be realized as an all-in-one type or a separate type with the electronic device 100. An additional device including the separate type camera unit 162 may be electrically connected to the electronic device 100 through the communicator 150 or the I/O unit 170.

It will be easily understood by those of ordinary skill in the art that the camera unit 162 may be excluded according to a performance and a structure of the electronic device 100.

A light receiver 163 receives a light signal (including a control signal) from an external control device through a light window of a bezel of the display unit 115. The light receiver 163 may receive the light signal corresponding to a user input (e.g., a touch, pressing, a touch gesture, a voice, or a motion) from the external control device. The control signal may be extracted from the received light signal under control of the controller 180.

The I/O unit 170 receives a video (e.g., a moving image or the like), an audio (e.g., a voice, music, or the like), and additional information (e.g., an EPG or the like) from an outside of the electronic device 100 under control of the controller 180. The I/O unit 170 may include one selected from a High-Definition Multimedia Interface (HDMI) port 171, a component jack 172, a PC port 173, and a universal serial bus (USB) port 174. The I/O unit 170 may include a combination of the HDMI port 171, the component jack 172, the PC port 173, and the USB port 174.

It will be easily understood by those of ordinary skill in the art that a structure and an operation of the I/O unit 170 may be variously realized according to one or more exemplary embodiments.

The controller 180 controls an overall operation of the electronic device 100 and a signal flow between the elements 110 through 190 of the electronic device 100, and performs a function of processing data. If there is a user input or a preset and stored condition is satisfied, the controller 180 may execute an operating system (OS) and various types of applications stored in the storage unit 190.

The controller 180 may include a random access memory (RAM) 181 that stores a signal or data input from the outside of the electronic device 100 or is used as a storage area corresponding to various types of jobs performed in the electronic device 100, a read only memory (ROM) 182 that stores a control program for controlling the electronic device 100, and a main central processing unit (CPU) 183.

The main CPU 183 may include a graphic processing unit (GPU) for processing a graphic corresponding to a video. The main CPU 183 may be realized as a System On Chip (SoC) into which a core and the GPU are integrated. The main CPU 183 may include a single core, a dual core, a triple core, a quad core, and a multiple core.

The main CPU 183 may also include a plurality of processors. For example, the main CPU 183 may be realized as a main processor and a sub processor that operates in a sleep mode.

A graphic processor 184 generates a screen including various types of objects, such as an icon, an image, a text, etc., by using an operator and a renderer. The operator calculates attribute values, such as coordinate values at which the objects will be respectively displayed, shapes, sizes, colors, etc., of the objects, according to a layout of a screen by using the user interaction detected by the detection unit 160. The renderer generates a screen having various types of layouts including objects based on the attribute values calculated by the operator. The screen generated by the renderer is displayed in a display area of the display unit 115.

First through n^{th} interfaces 185-1 through 185-n are connected to various types of elements described above. One of the first through n^{th} interfaces 185-1 through 185-n may be a network interface that is connected to an external device through a network.

The RAM 181, the ROM 182, the main CPU 183, the graphic processor 184, and the first through n^{th} interfaces 185-1 through 185-n may be connected to one another through an internal bus 186.

The term "controller" used herein may include the main CPU 183, the ROM 182, and the RAM 181.

The controller 180 of the electronic device 100 according to an exemplary embodiment may extract text information indicating a news content.

The controller 180 may also extract the text information from at least one selected from subtitles and a sound included in the news content.

Also, the controller 180 may request news titles from an external server through the communicator 150 and receive the news titles from the external server.

The controller 180 may generate a news cluster into which the news titles are grouped according to topics.

The controller 180 may extract keywords from the news titles and group the news titles according to topics by using the extracted keywords.

The controller 180 may generate a representative expression of one news cluster from keywords of news titles, which are grouped into the one news cluster, according to a preset algorithm.

The controller 180 may select a keyword having high weight information from keywords of the news titles and sequentially select keywords, which will be subsequently arranged, to generate the representative expression of the news cluster.

The controller 180 may map the extracted text information on the news clusters to select a news cluster, which is similar to the text information by a preset threshold value or more, as a news cluster corresponding to the text information.

The controller 180 may display a representative expression of the selected news cluster on the display unit 115.

The controller 180 may transmit the representative expression of the selected news cluster to an external server through the communicator 150 and receive result information, which is searched by using the representative expression as a search query language, from the external server. The controller 180 may display the received result information on the display unit 115.

The controller 180 may transmit the result information to a preset display apparatus through the communicator 150 may control the preset display apparatus to display the result information on a display unit of the preset display apparatus.

The controller 180 may display news titles included in a news cluster on a display unit.

It will be easily understood by those of ordinary skill in the art that a structure and an operation of the controller 180 may be variously embodied according to one or more exemplary embodiments.

The storage unit 190 (e.g., memory) may store various types of data, programs, or applications for driving and controlling the electronic device 100 under control of the controller 180. The storage unit 190 may store input and/or output signals or data corresponding to driving of the video processor 110, the display unit 115, the audio processor 120, the audio output unit 125, the power supply unit 130, the tuner 135, the communicator 150, the detection unit 160, and the I/O unit 170. The storage unit 190 may store a control program for controlling the electronic device 100 and the controller 180, an application initially provided by a manufacturer or downloaded from an external source, a graphical user interface (GUI) related to the application, an object (e.g., an image text, an icon, a button, or the like) for providing the GUI, user information, a document, databases (DBs), or pieces of related data.

The term "storage unit" used in an exemplary embodiment includes the storage unit 190, the ROM 182 or the RAM 181 of the controller 180, or a memory card (e.g., a micro secure digital (SD) card, a USB memory, or the like) installed in the electronic device 100. The storage unit 190 may include a nonvolatile memory, a volatile memory, a hard disk drive (HDD), or a solid state drive (SSD).

The storage unit 190 may include a broadcast reception module, a channel control module, a volume control module, a communication control module, a voice recognition module, a motion recognition module, a light reception module, a display control module, an audio control module, an external input control module, a power control module, a power control module of an external device connected by wireless (e.g., Bluetooth), a voice DB, or a motion DB. Modules and DBs of the storage unit 190 may be embodied as software types to perform a control function of a broadcast reception, a channel control function, a volume control function, a communication control function, a voice recognition function, a motion recognition function, a light reception control function, a display control function, an audio control function, an external input control function, a power control function, or a power control function of an external device connected by wireless (e.g., Bluetooth) in the electronic device 100. The controller 180 may perform functions by using pieces of software stored in the storage unit 190.

Also, the electronic device 100 having the display unit 115 may be electrically connected to an additional external device (e.g., a set-top box) having a tuner. For example, it will be easily understood by those of ordinary skill in the art that the electronic device 100 may be realized as an analog TV, a digital TV, a 3D TV, a smart TV, an LED TV, an OLED TV, a plasma TV, a monitor, or the like but is not limited thereto.

At least one selected from the elements 110 through 190 of the electronic device 100 of FIG. 3 may be added or deleted according to a performance of the electronic device 100. Also, it will be easily understood by those of ordinary skill in the art that locations of elements (e.g., 110 through 190) may be changed according to a performance or a structure of the electronic device 100.

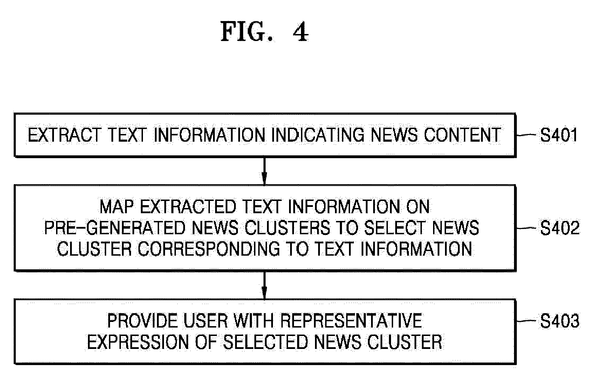

FIG. 4 is a flowchart of a method of providing information associated with a news content through an electronic device, according to an exemplary embodiment.

In operation S401 of FIG. 4, the controller 180 of the electronic device 100 according to an exemplary embodiment may extract text information indicating a news content.

The controller 180 according to an exemplary embodiment may extract the text information from at least one selected from subtitles and a sound included in the news content. For example, the controller 180 may analyze a sound of a news content by using an Automatic Speech Recognition (ASR) technology or the like or analyze subtitles of the news content by using an Optical Character Reader (OCR) technology or the like to extract the text information.

In operation S402 of FIG. 4, the controller 180 of the electronic device 100 according to an exemplary embodiment may map the text information extracted in operation S401 on pre-generated news clusters to select a news cluster corresponding to the text information.

The controller 180 of the electronic device 100 according to an exemplary embodiment may request news titles from an external server through the communicator 150 and receive the news titles from the external server to generate a news cluster. For example, the electronic device 100 may receive news titles, which are recently provided in an RSS feed form, to group pieces of news according to topics of the news titles so as to generate a news cluster.

According to another exemplary embodiment, the system may further include a server, and the electronic device 100 may request a news cluster from the sever at preset time intervals. The server may transmit a news cluster, which is generated based on recent news titles, to the electronic device 100.

The controller 180 according to an exemplary embodiment may map the text information on the news clusters and select a news cluster, which is similar to the text information by a preset threshold value or more, as a news cluster corresponding to the text information.

In operation S403 of FIG. 4, the controller 180 of the electronic device 100 according to an exemplary embodiment may provide a user with a representative expression of the news cluster selected in operation S402.

The controller 180 according to an exemplary embodiment generate a representative expression of one news cluster from keywords of news titles, which are grouped into the one news cluster, according to a preset algorithm. For example, the controller 180 may generate a representative expression of a news cluster by using a Hobbyist's Interchange Tape Standard (HITS) algorithm or the like.

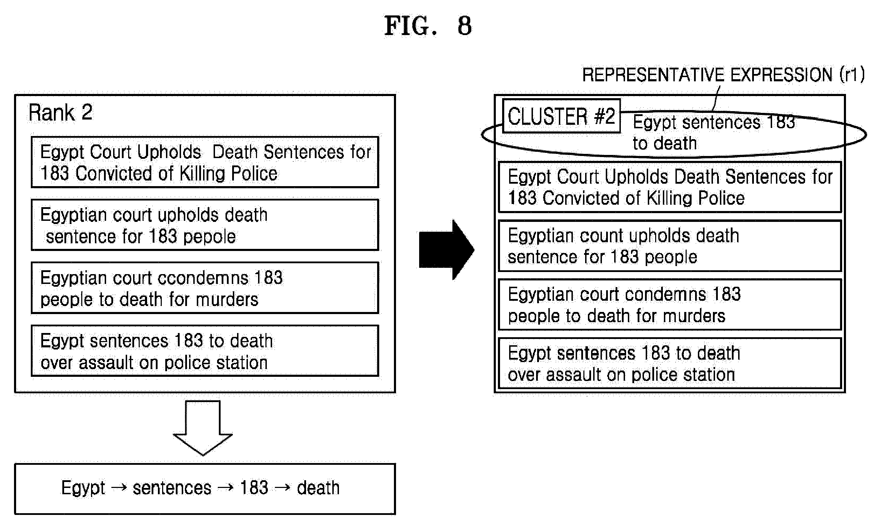

The controller 180 according to an exemplary embodiment may select a keyword having high weight information from keywords of news titles and sequentially select keywords, which will be subsequently arranged, to generate a representative expression of a news cluster. This will be described in more detail later through an exemplary embodiment of FIG. 8 that will be described later.

The controller 180 according to an exemplary embodiment may display the generated representative expression on the display unit 115.

The controller 180 according to an exemplary embodiment may transmit the generated representative expression to an external server through the communicator 150 and receive result information, which is searched by using the representative expression as a search query language, from the external server. The controller 180 may also display the received result information on the display unit 115.

Also, the controller 180 according to an exemplary embodiment transmit the result information to a preset display apparatus through the communicator 150 and control the preset display apparatus to display the searched result information on a display unit of the preset display apparatus.

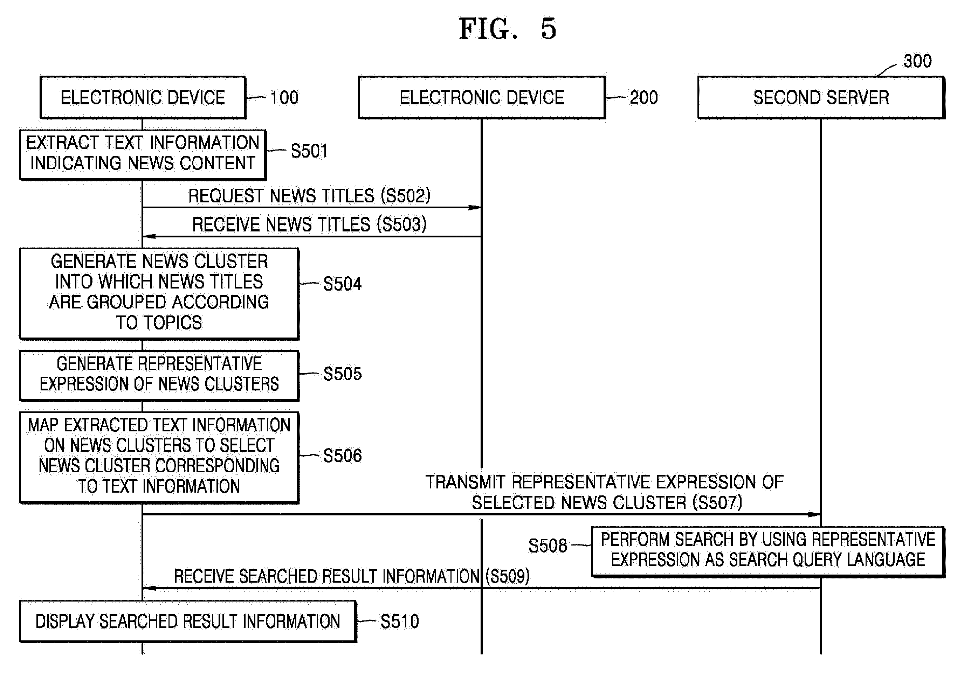

FIG. 5 is a flowchart of a method of controlling an electronic device, a first server, and a second server, according to an exemplary embodiment.

In operation S501 of FIG. 5, the electronic device 100 may extract text information indicating a news content. The controller 180 of the electronic device 100 according to an exemplary embodiment may analyze at least one selected from subtitles and a sound included in a news content to acquire text information indicating the news content.

In operation S502, the electronic device 100 may request news titles from the first sever 200 through the communicator 150. In operation S503, the electronic device 100 may receive news titles from the first server 200 through the communicator 150. In operation S504, the electronic device 100 may generate a news cluster into which news titles are grouped according to topics.

The electronic device 100 generates a news cluster as described with reference to FIG. 5 but is not limited thereto. According to another exemplary embodiment, the system may further include a server, and the server may request news titles from the first server 200 providing a news service to generate a news cluster. The electronic device 100 may request a news cluster from the server at preset time intervals. The server may generate a news cluster based on recent news titles received from the first server 200 and transmit the generated news cluster to the electronic device 100.

In operation S505 of FIG. 5, the electronic device 100 may generate a representative expression of news clusters. According to an exemplary embodiment, the controller 180 may generate a representative expression of one news cluster from keywords of news titles, which are grouped into the one news cluster, according to a preset algorithm. This will be described in more detail through an exemplary embodiment illustrated in FIG. 8.

In operation S506, the electronic device 100 may map the text information extracted in operation S501 on news clusters to select a news cluster corresponding to the text information. The controller 180 according to an exemplary embodiment may map the text information on the news clusters to select a news cluster, which is similar to the text information by a preset threshold value or more, as a news cluster corresponding to the text information.

In operation S507, the electronic device 100 may transmit a representative expression of the news cluster selected in operation S506 to the second server 300 through the communicator 150.

In operation S508, the second server 300 may perform a search by using the representative expression received from the electronic device 100 as a search query language. For example, the second server 300 is an Internet portal site, and may search for and provide a content, such as a news article, a moving image, an image, an associated site, a web document, a blog, etc., associated with the search query language.

In operation S509, the electronic device 100 may receive searched result information from the second server 300 through the communicator 150. In operation S510, the electronic device 100 may display the result information received from the second server 300 on the display unit 115.

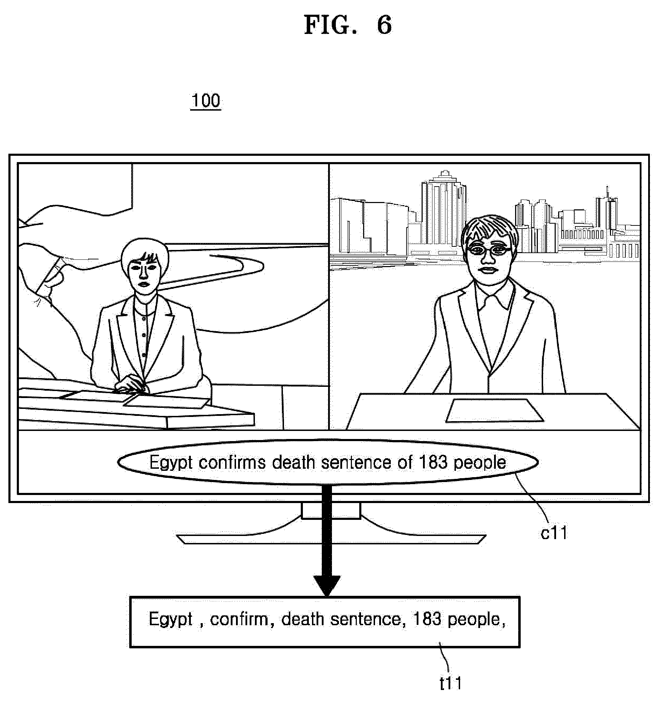

FIG. 6 illustrates an analysis of a news content according to an exemplary embodiment.

As shown in FIG. 6, if the electronic device 100 provides a news content, the news content may include subtitle information, sound information, etc.

According to an exemplary embodiment, the controller 180 may extract subtitles c11 (e.g., "Egypt confirms death sentence for 183 people"), which are displayed in an image of a news content, as a text by using an OCR technology or the like.

According to an exemplary embodiment, the controller 180 may remove a meaningless word, such as an article, a preposition, a postposition, a conjunction, or the like, from one sentence including a subject, a verb, an object, etc. The controller 180 may also remove an ending part added for a grammatical function such as a singular, a plural, a tense, or the like.

As shown in FIG. 6, for example, text information, such as "Egypt", "confirm", "death sentence", "183 people", or the like, may be extracted from subtitles of a news content.

FIG. 6 illustrates an exemplary embodiment but is not limited thereto.

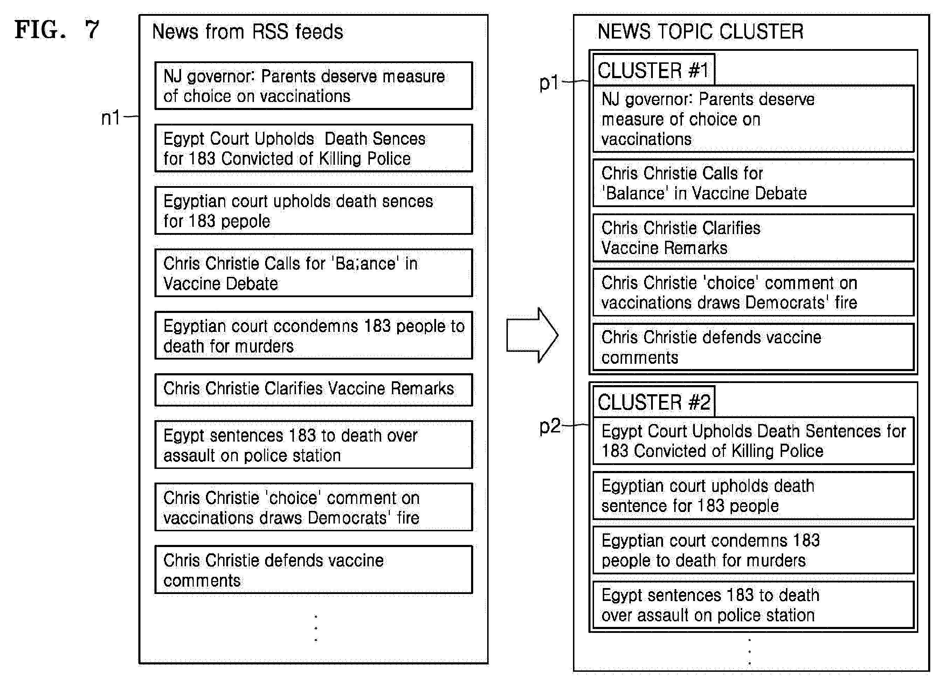

FIG. 7 illustrates a news cluster according to an exemplary embodiment.

As shown in FIG. 7, for example, the electronic device 100 may receive news titles that are recently provided in an RSS feed form.

According to an exemplary embodiment, the electronic device 100 may extract keywords from news titles and group the news titles according to topics of the news titles by using the extracted keywords. As shown in FIG. 7, for example, cluster #1 and cluster #2, which are grouped according to similar news topics, may be generated.

According to another exemplary embodiment, the electronic device 100 may request a news cluster from a server at preset time intervals. According to an exemplary embodiment, the server may collect recently provided news titles to generate a news cluster and transmit the generated news cluster to the electronic device 100.

FIG. 7 illustrates an exemplary embodiment but is not limited thereto.

FIG. 8 illustrates generation of a representative expression of a news cluster according to an exemplary embodiment.

As shown in FIG. 8, the controller 180 of the electronic device 100 may generate a representative expression from keywords of news titles, which are grouped into one news cluster, according to a preset algorithm (e.g., an HITS algorithm).

According to an exemplary embodiment, the controller 180 may build a word graph and then apply a graph analysis algorithm or the like to generate a representative expression.

According to an exemplary embodiment, the controller 180 may select a keyword having high weight information from keywords of news titles and sequentially select keywords, which will be subsequently arranged, to generate a representative expression.

For example, weight information of each of keywords included in cluster #2 may be allocated by using topics of the keywords. For example, as a frequency of each of the keywords used in the news titles is high, the weight information may be highly allocated. Referring to FIG. 8, for example, if weight information of "Egypt" is high, "Egypt" may be selected, and then "sentences", "183", and "death" may be sequentially selected. Therefore, "Egypt sentences 183 to death" (r1) may be generated as a representative expression.

FIG. 8 illustrates an exemplary embodiment but is not limited thereto.

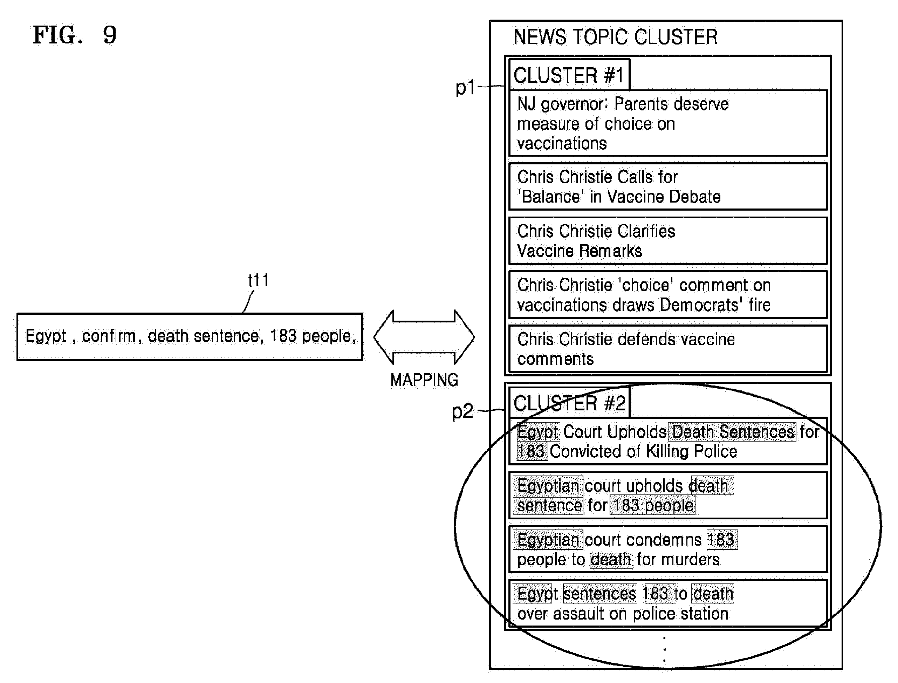

FIG. 9 illustrates mapping of text information on news clusters, according to an exemplary embodiment.

According to an exemplary embodiment, the electronic device 100 may map text information t11 extracted in FIG. 6 on news clusters p1, p2, etc. The controller 180 may map the text information t11 on the news clusters p1, p2, etc., to select a news cluster, which is similar to the text information t11 by a preset threshold value or more, as a news cluster corresponding to the text information t11.

For example, the controller 180 may select cluster #2 that includes many words corresponding to text information (e.g., "Egypt", "confirm", "death sentence", and "183 people") of news subtitles and thus are similar to the text information.

FIG. 9 illustrates an exemplary embodiment but is not limited thereto.

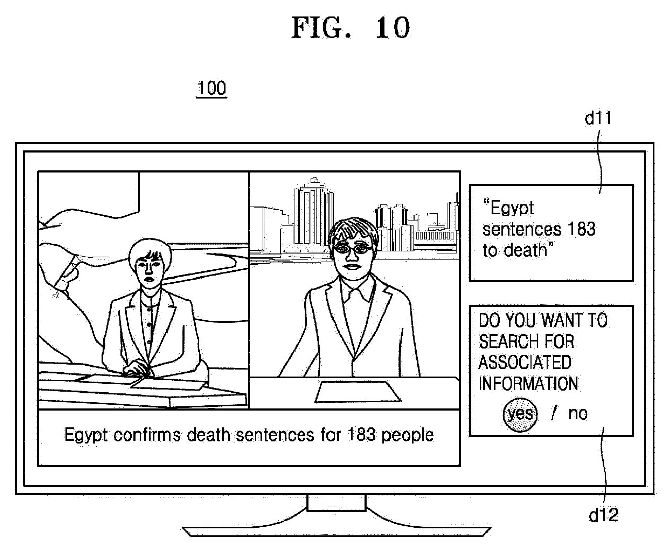

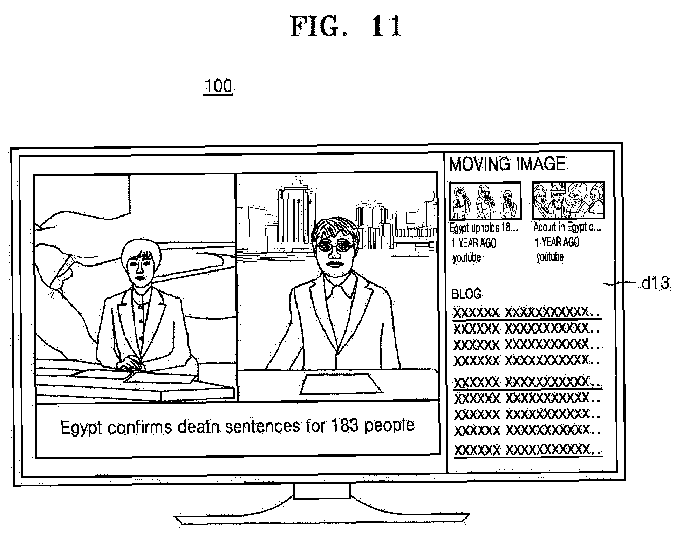

FIGS. 10 and 11 illustrate searched result information associated with a news content, according to an exemplary embodiment.

As shown in FIG. 10, the controller 180 of the electronic device 100 may display a representative expression d11 (refer to FIG. 8) (e.g., "Egypt sentences 183 to death") of the cluster #2 selected in FIG. 9 on the display unit 115.

Also, according to an exemplary embodiment, the electronic device 100 may display a user interface (UI) screen d12, which is for further searching for information associated with a news content that is currently being broadcast, on the display unit 115.

If a user input to further search for associated information is received, the electronic device 100 according to an exemplary embodiment may transmit the representative expression d1 to an external server through the communicator 150 and request a search result that is acquired by using the representative expression d11 as a search query language.

According to an exemplary embodiment, an external search server that will transmit the representative expression may be a server of an Internet portal site but is not limited thereto.

According to an exemplary embodiment, the controller 180 may set a search server to default when manufacturing the electronic device 100. The controller 180 may also set or change the search server according to an input of a user.

Referring to FIG. 11, the controller 180 of the electronic device 100 may display search result information d13 received from an external server on the display unit 115.

For example, the search result information d13 is a search result of an Internet portal site and may include a content, such as a moving image, a blog, or the like, associated with a representative expression used as a search query language.

According to an exemplary embodiment, the controller 180 of the electronic device 100 may divide the display unit 115 into a plurality of areas, display a news content in one of the divided areas, and display the search result information d13 in another one of the divided areas.

According to another exemplary embodiment, the controller 180 may overlap the search result information d13 in an area on the news content displayed on the display unit 115 but is not limited thereto.

FIGS. 10 and 11 illustrate an exemplary embodiment but are not limited thereto.

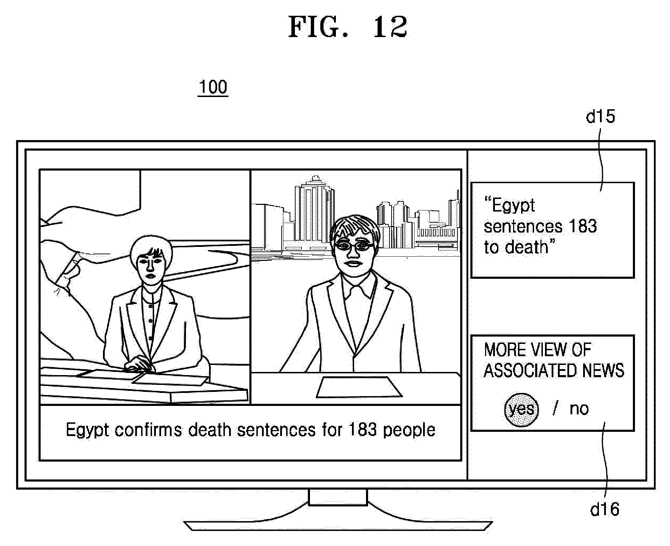

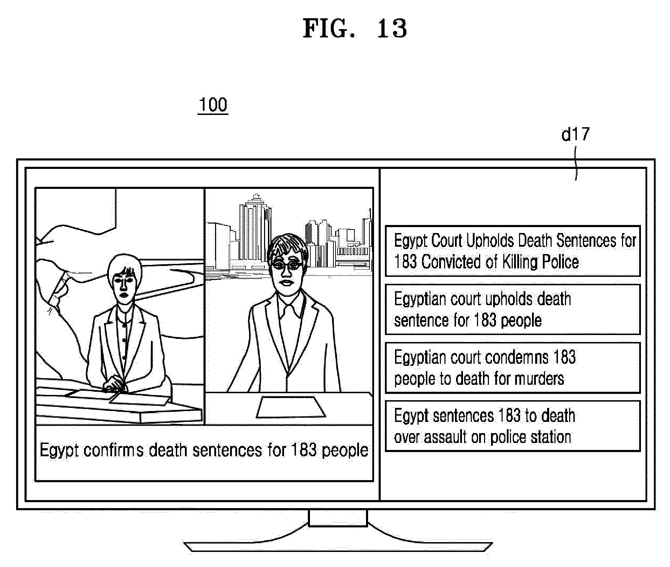

FIGS. 12 and 13 illustrate provision of other pieces of news associated with a news content, according to an exemplary embodiment.

Referring to FIG. 12, according to an exemplary embodiment, the controller 180 may display a representative expression (e.g., "Egypt sentences 183 to death") of the cluster #2 selected in FIG. 9 (refer to FIG. 8) on the display unit 115.

According to an exemplary embodiment, the electronic device 100 may display a UI screen d16, which is for further providing a news article associated with a news content that is currently being broadcast, on the display unit 115.

Referring to FIG. 13, if a user input to further check a news article is received, the electronic device 100 according to an exemplary embodiment may display news titles d17, which are included in a news cluster (refer to FIG. 9) selected to correspond to text information of news subtitles, on the display unit 115.

According to an exemplary embodiment, a user may be additionally provided with a news article similar to a news content that is currently being broadcast.

FIGS. 12 and 13 illustrate an exemplary embodiment but are not limited thereto.

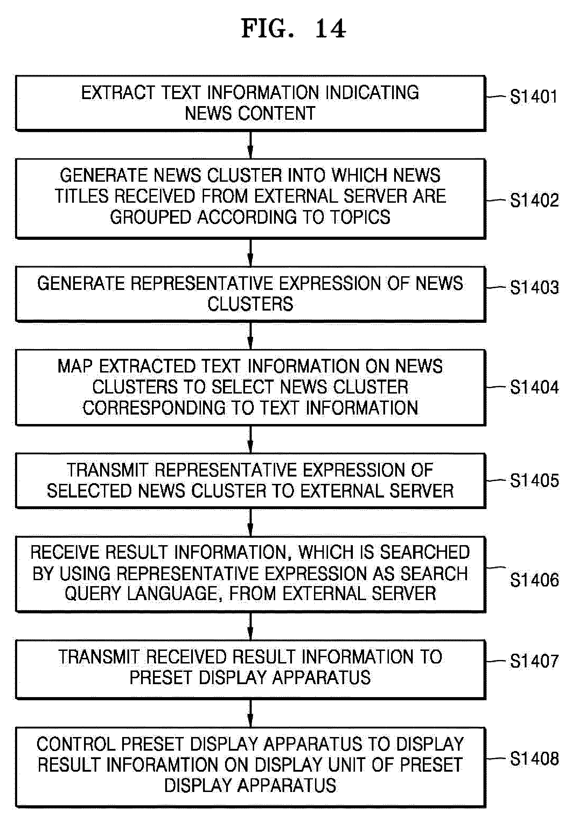

FIG. 14 is a flowchart of a method of providing search result information associated with a news content, according to an exemplary embodiment.

In operation S1401 of FIG. 14, the controller 180 of the electronic device 100 according to an exemplary embodiment may extract text information indicating a news content. In operation S1402, the controller 180 may generate a news cluster that is grouped according to topics of news titles received from an external server. In operation S1403, the controller 180 may generate a representative expression of news clusters. In operation S1404, the controller 180 may map the extracted text information on the news cluster to select a news cluster corresponding to the text information. In operation S1405, the controller 180 may transmit a representative expression of the selected news cluster to an external server. In operation S1406, the controller 180 may receive result information, which is searched by using the representative expression as a search query language, from the external server.

Operations S1401 through S1406 are the same as operations S501 through 509 of FIG. 5 described above, and thus their detailed descriptions are omitted.

In operation S1407 of FIG. 14, the controller 180 of the electronic device 100 according to an exemplary embodiment may transmit result information received through the communicator 150 to a preset display apparatus. In operation S1408, the controller 180 of the electronic device 100 according to an exemplary embodiment may control the preset display apparatus to display the result information on a display unit of the preset display apparatus.

According to an exemplary embodiment, the electronic device 100 may search for one of devices of a user that may be connected by Bluetooth and transmit search result information to the Bluetooth-connected device.

According to another exemplary embodiment, the electronic device 100 may pre-set another display apparatus that will receive search result information and may request an external server to transmit the search result information to the preset display apparatus.

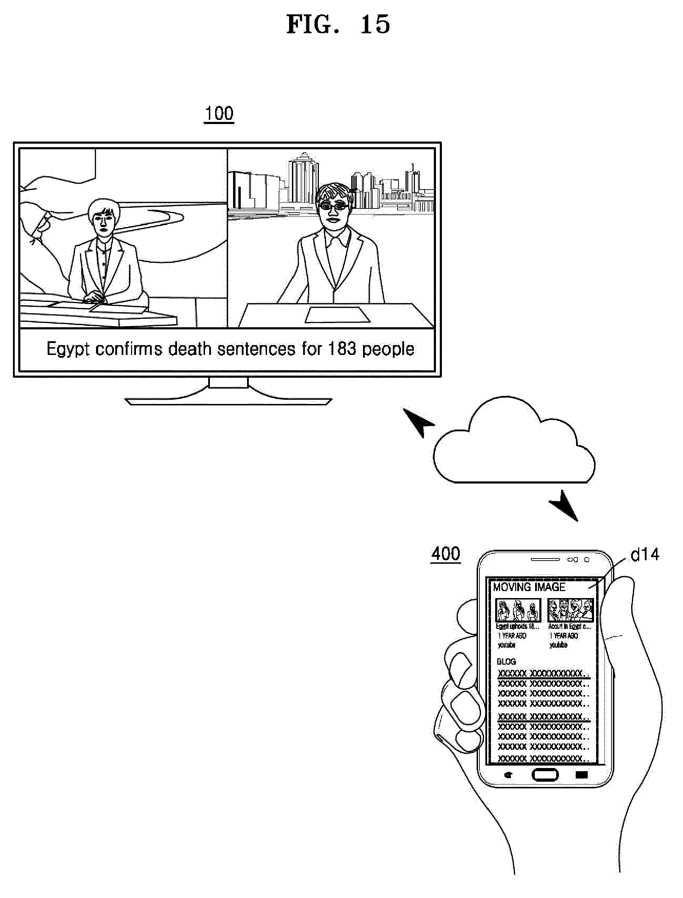

FIG. 15 illustrates provision of search result information associated with a news content, according to another exemplary embodiment.

According to an exemplary embodiment, the controller 180 of the electronic device 100 may control to transmit search result information associated with a news content to a display apparatus 400 and display search result information d14 on a display unit of the display apparatus 400.

As shown in FIG. 15, for example, a user who views news may check associated information, such as a moving image, a blog, etc., associated with a news content searched from an Internet portal site, from a smartphone 400 of the user.

FIG. 15 illustrates an exemplary embodiment but is not limited thereto.

It may be understood that the above-described exemplary embodiments are exemplary but are not limited. Also, it may be understood that orders of operations illustrated in the flowcharts of FIGS. 4, 5, and 11 are not limited, but some of the operations may be omitted or added, and orders of some operations may be changed.

Some exemplary embodiments may be realized as a recording medium type including a computer-executable command such as a computer-executable program module. A computer readable recording medium may be an arbitrary available medium that may be accessed by a computer, and examples of the computer readable recording medium include all of volatile and nonvolatile media, and separable and inseparable media. The computer readable recording medium may also include all of a computer storage medium and a communication medium. Examples of the computer storage medium include all of volatile and nonvolatile media, and separable and inseparable media that are embodied according to an arbitrary method or technology for storing information such as a command, a data structure, a program module, or other pieces of data that may be read by a computer. The communication medium includes a computer readable command, a data structure, a program module, other pieces of data of a modulated data signal such as carrier waves, or other transmission mechanisms and includes an arbitrary information transmission medium.

Also, the term "unit" used herein may be a hardware component such as a processor or a circuit and/or a software component executed by a hardware component such as a processor.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the spirit and scope as defined by the following claims.

## Claims

1. An electronic device comprising:
a tuner configured to receive news content; and
a controller configured to extract text information from the news content, map the extracted text information onto pre-generated news clusters to select a news cluster corresponding to the text information, and provide a representative expression of the selected news cluster.

2. The electronic device of claim 1, wherein the controller is further configured to extract the text information from at least one selected from among subtitles and a sound from the news content.

3. The electronic device of claim 1, further comprising:
a communicator,
wherein the controller is further configured to request news titles from an external server through the communicator, receive the news titles from the external server, and generate a news cluster into which the news titles are grouped according to topics.

4. The electronic device of claim 3, wherein the controller is further configured to extract keywords from the news titles and group the news titles according to the topics by using the extracted keywords.

5. The electronic device of claim 1, wherein the controller is further configured to generate a representative expression of one news cluster from keywords of news titles according to a preset algorithm.

6. The electronic device of claim 5, wherein the controller is further configured to select a keyword having high weight information from keywords of the news titles and sequentially select keywords and arrange the selected keywords to generate a representative expression of the news cluster.

7. The electronic device of claim 1, wherein the controller is further configured to map the extracted text information onto the news clusters to select a news cluster that is similar to the extracted text information by at least a preset threshold as a news cluster corresponding to the text information.

8. The electronic device of claim 1, further comprising:
a display,
wherein the controller is further configured to display a representative expression of the selected news cluster on the display.

9. The electronic device of claim 1, further comprising:
a communicator,
wherein the controller is further configured to transmit a representative expression of the selected news cluster to an external server through the communicator and receive result information, which is searched for by using the representative expression as a search query language, from the external server.

10. The electronic device of claim 9, further comprising:
a display,
wherein the controller is further configured to display the received result information on the display.

11. The electronic device of claim 9, wherein the controller is further configured to transmit the result information to a preset display apparatus through the communicator and control the preset display apparatus to display the result information on a display of the preset display apparatus.

12. The electronic device of claim 1, further comprising:
a display,
wherein the controller is further configured to display news titles from the selected news cluster on the display.

13. A method of providing information associated with news content, the method comprising:
extracting text information from news content received through a tuner;
selecting a news cluster corresponding to the extracted text information by mapping the extracted text information onto pre-generated news clusters; and
providing a representative expression of the selected news cluster.

14. The method of claim 13, wherein the text information is extracted from at least one selected from among subtitles and a sound from the news content.

15. A non-transitory computer-readable recording medium having recorded
thereon a program for executing the method according to claim 13.
